Europäisches Patentamt

European Patent Office

Office européen des brevets

(19)

(11) Veröffentlichungsnummer: **0 319 793**
**A1**

(12) # EUROPÄISCHE PATENTANMELDUNG

(21) Anmeldenummer: 88119654.7

(22) Anmeldetag: 25.11.88

(51) Int. Cl.⁴: **F16B 21/08**

(30) Priorität: 05.12.87 DE 3741229

(43) Veröffentlichungstag der Anmeldung:
14.06.89 Patentblatt 89/24

(84) Benannte Vertragsstaaten:
**DE ES FR GB IT**

(71) Anmelder: **AUDI AG**
**Postfach 220**
**D-8070 Ingolstadt(DE)**

(72) Erfinder: **Schulz, Norbert**
**Nobelstrasse 34**
**D-8070 Ingolstadt(DE)**
Erfinder: **Steuer, Ulrich**
**Eichenstrasse 3 1/2**
**D-8071 Wettstetten(DE)**

(74) Vertreter: **Engelhardt, Harald**
**AUDI AG Patentabteilung Postfach 220**
**D-8070 Ingolstadt(DE)**

(54) **Rastverbindung.**

(57) Es wird eine Rastverbindung zur Halterung eines Einsteckteiles (9) in einer Öffnung (5) eines Träger (3) vorgeschlagen, wobei das Einsteckteil (9) mit einem laschenförmigen Ansatzstück (7) versehen ist, welches tiefenbegrenzt in die Öffnung (5) einsteckbar ist. Das Ansatzstück (7) ist mit einer Raste (19) versehen, welche sich an dem Träger (3) im Randbereich der Öffnung (5) abstützt. Um zu vermeiden, daß bei einer starken Belastung des Einsteckteiles in Abzugsrichtung die Raste (19) zu stark ausgelenkt wird, wodurch ein großes Spiel oder ein Abbrechen der Raste (19) auftreten k nn ist an der Raste (19) ein Ansatz (23) angeformt, welcher zur Begrenzung der Auslenkung der Raste (19) an der Innenwandung der Öffnung (5) anliegt.

Fig. 2

## Rastverbindung

Die Erfindung bezieht sich auf eine Rastverbindung zur Halterung eines Einsteckteiles in einer Öffnung eines Trägers gemäß dem Oberbegriff des Patentanspruches.

Gattungsgemäße Rastverbindungen werden an vielerlei Stellen eingesetzt, um auf schnelle und kostengünstige Weise zwei Teile miteinander zu verbinden. Dabei werden das Einsteckteil und das anangeformte, die Raste aufweisende Ansatzstück meist aus Kunststoff gefertigt. Das Ansatzstück ist bis auf die vorstehende Raste an den Querschnitt der Öffnung im Träger angepaßt. Beim Einführen des Ansatzstückes in die Öffnung wird die federelastische Raste durch die Wandung der Öffnung in die Ebene des Ansatzstückes zurückbewegt, wodurch die Raste eine Vorspannung erhält. Nach dem vollständigen Einschieben des Ansatzstückes in die Öffnung bis zu einer Anschlagfläche kommt die Raste frei und gelangt durch die beim Zusammenfügen erzeugte Vorspannung in ihre ursprüngliche Lage, in der sie gegenüber dem Ansatzstück vorsteht. In dieser entspannten Stellung befindet sich der dem Träger zugewandte Abschnitt der Raste dem Randbereich der Öffnung gegenüberliegend, wodurch die Rastverbindung gegen ein Abziehen des Einsteckteiles gesichert ist.

In der Praxis kann es vorkommen, daß das Einsteckteil übermäßig in Abzugsrichtung belastet wird. Dadurch wird die Raste verstärkt ausgelenkt. Abhängig von der Materialzusammensetzung, der Größe und der Dauer der einwirkenden Kraft führt dies dazu, daß die Raste nicht mehr in ihre ursprüngliche Position zurückkehrt. Dies hat zur Folge, daß die Rastverbindung ein großes Speil aufweist, was in vielen Fällen nachteilig oder unerwünscht ist. Bei sehr hoher Belastung des Einsteckteiles kann die Raste so weit überdehnt werden, daß sie abbricht und die Verbindung gelöst ist.

Der Erfindung liegt die Aufgabe zugrunde, eine gattungsgemäße Rastverbindung so weiterzubilden, daß mit einfachen baulichen Mitteln eine zu starke Auslenkung der Raste vermieden wird.

Die Aufgabe wird dadurch gelöst, daß an der Raste ein Ansatz angeformt ist, welcher zur Begrenzung der Auslenkung der Raste an der Innenwandung der Öffnung anliegt.

Der Ansatz ist so ausgebildet, daß er bei bis zu einem Anschlag in die Öffnung des Trägers eingeschobenem Ansatzstück stets noch an der Innenwandung der Öffnung anliegt. Dadurch ist auf jeden Fall sichergestellt, daß die Raste auch bei sehr hoher Belastung in Abzugsrichtung nur begrenzt ausgelenkt werden kann. Ein unerwünschtes Spiel in der Rastverbindung oder gar eine Zerstörung der Rastverbindung wird somit sicher vermieden.

Der Ansatz kann in einfacher Weise einstückig an die Raste angeformt sein. Wird der Ansatz gleich bei der Werkzeugherstellung für das Einsteckteil berücksichtigt, dann ist er praktisch ohne Mehraufwand realisierbar.

Ein Ausführungsbeispiel der Erfindung ist in der Zeichnung dargestellt. Es zeigt

Fig. 1 abschnittsweise ein Einsteckteil, welches in eine Öffnung eines Trägers eingefügt ist und

Fig. 2 den Schnitt II-II aus Fig. 1.

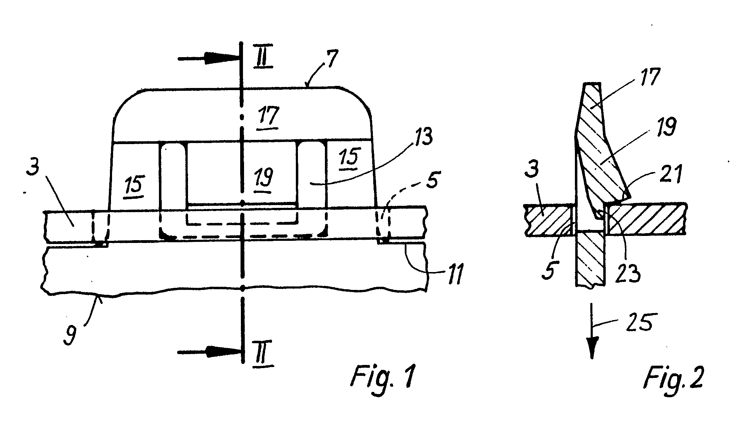

Ein in Fig. 1 abschnittsweise dargestellter Träger 3 ist mit einer Öffnung 5 versehen, in welche ein laschenförmiges Ansatzstück 7 eines ebenfalls nur abschnittsweise dargestellten Einsteckteiles 9 eingeschoben ist.

Die Öffnung 5 im Träger 3 ist geringfügig größer als der Querschnitt des Ansatzstückes 7 ausgeführt, so daß dieses ohne Probleme in die Öffnung 5 eingeführt werden kann. Die Einschubtiefe ist begrenzt durch die Anlage der Wand 11 des Einsteckteiles 9 an dem Träger 3.

Wie aus Fig. 1 unmittelbar ersichtlich, weist das Ansatzstück 7 eine Aussparung 13 auf, die durch seitliche Stege 15 und einen zur Öffnung 5 des Trägers 3 etwa parallelen Steg 17 nach außen hin begrenzt ist. An den Steg 17 ist einstückig eine in die Aussparung 13 einragende federelastische Raste 19 angeformt.

Der Querschnitt der Raste 19 ist aus Fig. 2 deutlich zu erkennen. Diese Darstellung zeigt die Raste 19 in ihrer entspannten Stellung. Um sie durch die Öffnung 5 im Träger 3 beim Einführen des Einsteckteiles hindurch bewegen zu können, ist es notwendig, eine Kraft aufzuwenden, durch welche die Raste 19 unter Aufbau einer Vorspannung in die Ebene des Ansatzstückes 7 hineinbewegt wird. Wenn das Ansatzstück 7 bis zum Anschlag der Wand 11 an den Träger 3 eingeschoben ist, springt die Raste 19 durch die Vorspannung in die in Fig. 2 gezeigte Position. Dabei stützt sich die dem Träger 3 zugewandte Fläche 21 der Raste 19 im Randbereich der Öffnung 5 am Träger 3 ab und sichert dadurch die Rastverbindung.

Wie die Darstellung in Fig. 2 erkennen läßt, ist an die Raste 19 einstückig ein Ansatz 23 angeformt, welcher der Innenwand der Öffnung 5 gegenüberliegt. Durch den Ansatz 23 wird die Auslenkung der Raste 19 begrenzt. Ohne diesen Ansatz 23 wäre es nämlich möglich, daß bei entsprechender Zugbelastung in Richtung des Pfeiles 25 in Fig. 2 die Raste 19 aufgebogen wird. Wenn die Belastung in Richtung 25 länger anhält oder eine bestimmte Größe übersteigt, dann ist es der Raste 19 nämlich nicht mehr möglich, durch Eigenelastizität in ihre Urspsrungslage zurückzukehren. Die zu stark ausgelenkte Raste 19 hätte ein großes Spiel des Einsteckteiles 9 in dem Träger 3oder gar ein Abbrechen der Raste 19 und damit ein Lösen der Rastverbindung zur Folge.

Durch den gemäß der Erfindung vorgesehenen Ansatz 23 wird jedoch die Auslenkung so begrenzt, daß eine unzulässige Auslenkung nicht stattfinden kann. Die Raste 19 wird deshalb fast ausschließlich durch Druckkräfte und nicht durch Biegekräfte beansprucht.

## Ansprüche

Rastverbindung zur Halterung eines Einsteckteiles in einer Öffnung eines Trägers, wobei

a) das Einsteckteil ein laschenförmiges Ansatzstück aufweist, welches tiefenbegrenzt in die Öffnung einsteckbar ist,

b) das Ansatzstück mit einer Aussparung versehen ist,

c) an den die Aussparung begrenzenden, zur Öffnung im Träger etwa parallelen Steg des Ansatzstückes eine in die Aussparung einragende federelastische Raste angeformt ist und

d) sich die Raste bei in den Trägern eingefügtem Einsteckteil an dem Träger im Randbereich der Öffnung abstützt,

**dadurch gekennzeichnet,** daß an der Raste (19) ein Ansatz (23) angeformt ist, welcher zur Begrenzung der Auslenkung der Raste (19) an der Innenwandung der Öffnung (5) anliegt.

Fig. 1

Fig. 2

EP 0 319 793 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 125 100 (I.T.W.) <br> * Seite 2, Zeilen 75-95; Figuren 1-3 * <br> --- | 1 | F 16 B 21/08 |
| A | FR-A-2 014 097 (I.T.W.) <br> --- | | |
| A | FR-A-1 205 536 (I.T.W.) <br> * Seite 2, linke Spalte, Zeile 7 - <br> rechte Spalte, Zeile 13; Figuren 1-6 * <br> ----- | | |

**RECHERCHIERTE SACHGEBIETE (Int. Cl.4)**

F 16 B

Der vorliegende Recherchenbericht wurde für alle Patentansprüche erstellt

| Recherchenort | Abschlußdatum der Recherche | Prüfer |
|---|---|---|
| DEN HAAG | 13-03-1989 | VAN DER WAL W |